Europäisches Patentamt

European Patent Office

Office européen des brevets

(19)

(11) **EP 1 102 083 A1**

(12) **DEMANDE DE BREVET EUROPEEN**

(43) Date de publication:
**23.05.2001   Bulletin 2001/21**

(51) Int Cl.$^7$: **G01S 1/04**, H04B 1/707

(21) Numéro de dépôt: **00403138.1**

(22) Date de dépôt: **10.11.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **19.11.1999  FR 9914599**

(71) Demandeur: **THOMSON-CSF**
**75008 Paris (FR)**

(72) Inventeurs:
• **Delabbaye, Jean-Yves**
  **94117 Arcueil Cedex (FR)**
• **Soubielle, Jérôme**
  **94117 Arcueil Cedex (FR)**

(74) Mandataire: **Lucas, Laurent Jacques et al**
**Thomson-CSF**
**Propriété Intellectuelle**
**13, avenue du Président S. Allende**
**94117 Arcueil Cedex (FR)**

(54) **Récepteur pour système de positionnement par satellites en présence de trajets d'ondes radioélectriques parasites**

(57)     La présente invention concerne un récepteur pour système de positionnement par satellites en présence de trajets d'ondes radioélectriques parasites.

Un satellite émettant une onde codée, le code formant le signal utile étant du type pseudo-aléatoire répétitif et modulant une onde porteuse, la distance du récepteur au satellite est déterminée par le temps de propagation ($\tau$) de l'onde du satellite au récepteur. Le récepteur mémorise et déroule une réplique du code selon un modèle. Le temps de propagation est estimé dans une boucle de poursuite de code comme étant le retard qui maximise une fonction d'intercorrélation entre le signal utile reçu par le récepteur selon un trajet direct depuis le satellite et la réplique du code du signal concerné. Le modèle du signal utile s(t) en entrée du récepteur est défini en fonction du temps t par :

$$s(t) = A(t)c(t - \tau)e^{2\tau jf_d t} + z(t)c(t - \theta)e^{2\pi jf_d t} + b(t)$$

où :

-   $A(t)c(t - \tau)e^{2\pi jf_d t}$ modélise le signal direct du satellite au récepteur ;
-   $z(t)c(t-\theta)e^{2\pi jf_d t}$ modélise un signal équivalent à des signaux parasites réfléchis par une surface ;
-   b(t) représente un bruit gaussien ;

c(t) représentant le code et A(t) et z(t) ses amplitudes respectives pour le signal direct et pour le signal équivalent, $f_d$ représentant la fréquence Doppler du signal direct, $\tau$ représentant le retard du signal direct et $\theta$ le retard du signal équivalent.

L'invention s'applique notamment aux systèmes de type GPS ou équivalent lorsqu'un signal radioélectrique émis par un satellite se réfléchit sur une surface proche de l'antenne du récepteur, par exemple sur la surface terrestre, entraînant des erreurs de positionnement.

FIG.8

**Description**

La présente invention concerne un récepteur pour système de positionnement par satellites en présence de trajets d'ondes radioélectriques parasites. Elle s'applique notamment aux systèmes de type GPS ou équivalent lorsqu'un signal radioélectrique émis par un satellite se réfléchit sur une surface proche de l'antenne du récepteur, par exemple sur la surface terrestre, entraînant des erreurs de positionnement.

Dans un système de positionnement par satellites, la localisation d'un objet, c'est-à-dire la détermination de ses coordonnées d'espace x, y, z, s'effectue de façon connue par la détermination du temps de propagation $\tau$ d'une onde hyperfréquence particulière entre chaque satellite et l'objet, le temps de propagation permettant de déterminer la distance de l'objet au satellite. La connaissance de la distance par rapport à au moins quatre satellites permet ensuite de déterminer sa position dans un repère d'espace absolu.

Une étape importante préalable est donc de déterminer le plus correctement possible le temps de propagation d'une onde émise par un satellite à l'objet. A cet effet, un satellite émet généralement une onde modulée par un code pseudo-aléatoire répétitif particulier qui lui est spécifique, la fréquence de la porteuse étant la même pour tous les satellites. A titre d'exemple, dans le système GPS la période de répétition $T_R$ du code est sensiblement d'une milliseconde. Pendant une telle période, le code déroule 1023 symboles, prenant par exemple les valeurs +1 et -1, tous les symboles de code ayant une durée fixe $T_R/1023$. La durée d'un symbole, égale à 977,5 ns, est alors assimilée à ce dernier et appelée dans la littérature anglo-saxonne « chip ».

Une fonction d'un récepteur, porté par l'objet à localiser, est alors d'estimer correctement pour chaque signal particulier émis, son temps de propagation $\tau$ , encore appelé temps de retard, entre le satellite et l'objet. Pour cela, le récepteur mémorise une réplique du code, spécifique du satellite, puis déroule ce code au moyen d'une horloge locale. Le temps de propagation $\tau$ se caractérise à la fois par un décalage de phase de l'onde porteuse et par un décalage temporel du code pseudo-aléatoire modulant cette porteuse. En présence d'un mouvement relatif du récepteur sur sa ligne de visée vers le satellite s'ajoute un décalage de fréquence de la porteuse dû à l'effet Doppler. Les moyens de traitement du récepteur réalisent une corrélation entre le signal reçu et la réplique du code, le temps de propagation correspondant au retard $\tau$ de ce signal codé qui donne le maximum de corrélation. Le maximum de la fonction d'intercorrélation n'est en général pas directement accessible et doit être estimé par exemple par des méthodes du type du maximum de vraisemblance faisant par exemple intervenir des algorithmes du type récursif.

Les propriétés du code sont adaptées à la mission d'un système de positionnement par satellite, elles garantissent en particulier un très faible degré d'interférence entre deux signaux émis par deux satellites différents, par la structure pseudo-aléatoire du code, et un fonctionnement à très faible rapport signal sur bruit, du fait de l'étalement de spectre du code. Un tel code est par exemple connu sous l'abréviation CDMA correspondant aux initiales anglo-saxonnes « Code Division Multiple Access ».

Un problème se pose notamment du fait qu'une onde hyperfréquence émise par un satellite ne se dirige pas vers un récepteur selon un seul trajet direct, mais peut aussi atteindre ce récepteur par d'autres trajets parasites proches du trajet direct, ces derniers étant réfléchis notamment par la surface terrestre ou plus généralement par tous types de surfaces proches de l'antenne de réception. Ce cas se produit par exemple lorsque le porteur du récepteur est un objet volant à relativement basse altitude. Ces trajets parasites vont perturber le résultat de la fonction de corrélation précitée entre le signal reçu et la réplique du code. En particulier, l'estimation du maximum de la fonction de corrélation, telle que mise en oeuvre dans le cas du seul trajet direct, produit un résultat qui se trouve décalé et déformé. Il en résulte un calcul biaisé sur le retard $\tau$ et donc sur la distance du récepteur au satellite.

Un but de l'invention est de permettre d'estimer la distance d'un récepteur à un satellite sans erreur de positionnement notable due à la présence de trajets parasites de l'onde codée. A cet effet, l'invention a pour objet un récepteur pour système de positionnement par satellites, un satellite émettant une onde codée, le code formant le signal utile étant du type pseudo-aléatoire répétitif et modulant une onde porteuse, la distance du récepteur au satellite étant déterminée par le temps de propagation ($\tau$) de l'onde du satellite au récepteur, le récepteur mémorisant et déroulant une réplique du code selon un modèle, le temps de propagation étant estimé dans une boucle de poursuite de code comme étant le retard qui maximise une fonction d'intercorrélation entre le signal utile reçu par le récepteur selon un trajet direct depuis le satellite et la réplique du code, caractérisé en ce que le modèle du signal utile s(t) en entrée du récepteur est défini en fonction du temps t par :

$$s(t) = A(t)c(t -\tau)e^{2\pi j f_d t} + z(t)c(t - \theta)e^{2\pi j f_d t} + b(t)$$

où :

- $A(t)c(t -\tau)e^{2\pi j f_d t}$ modélise le signal direct du satellite au récepteur ;
- $z(t)c(t-\theta)e^{2\pi j f_d t}$ modélise un signal équivalent à des signaux parasites réfléchis par une surface ;

- b(t) représente un bruit gaussien ;

c(t) représentant le code et A(t) et z(t) ses amplitudes respectives pour le signal direct et pour le signal équivalent, fd représentant la fréquence Doppler du signal direct, $\tau$ représentant le retard du signal direct et $\theta$ le retard du signal équivalent.

L'invention a pour principaux avantages qu'elle permet d'unifier par un modèle unique les cas de réflexions parasites spéculaire et diffuse, qu'elle permet d'utiliser un même algorithme d'estimation avec et sans signaux parasites avec un même niveau de performance, qu'elle utilise un modèle simple pour le signal reçu au niveau d'un récepteur, qu'elle permet d'utiliser des circuits d'estimation existant et qu'elle évite de recourir à des calculs complexes.

D'autres caractéristiques et avantages de l'invention apparaîtront à l'aide de la description qui suit faite en regard de dessins annexés qui représentent :

- la figure 1, un exemple d'application du positionnement par satellite en l'absence de signaux parasites réfléchis entre un satellite et un récepteur ;
- la figure 2, l'allure de la fonction d'intercorrélation entre le signal reçu au niveau du récepteur et une réplique du code du satellite ;
- la figure 3, la fonction d'intercorrélation précitée pour trois retards particuliers associés à des voies communément appelées « Late », « Prompt » et « Early » ;
- la figure 4, un exemple de réalisation d'une boucle à verrouillage de code comprise dans un récepteur fonctionnant notamment en l'absence de trajets parasites réfléchis ;
- la figure 5, un exemple d'application du positionnement par satellite en présence de signaux parasites réfléchis entre un satellite et un récepteur ;
- les figures 6a et 6b, une illustration de l'influence des signaux parasites sur la fonction d'intercorrélation précédente ;
- les figures 7a et 7b, des illustrations respectives de la distribution de puissance des signaux parasites en fonction de leurs retards et la répartition de la puissance des signaux parasites en fonction de leurs fréquences Doppler telles que relevées par la Déposante ;
- la figure 8, par un synoptique, le principe de fonctionnement d'une boucle à verrouillage de code d'un récepteur selon l'invention ;
- la figure 9, un exemple de réalisation d'une boucle à verrouillage de code d'un récepteur selon l'invention ;
- la figure 10, un exemple de réalisation d'un module d'estimation des amplitudes des signaux direct et parasites équivalents du modèle de signal reçu mémorisé par un récepteur selon l'invention.

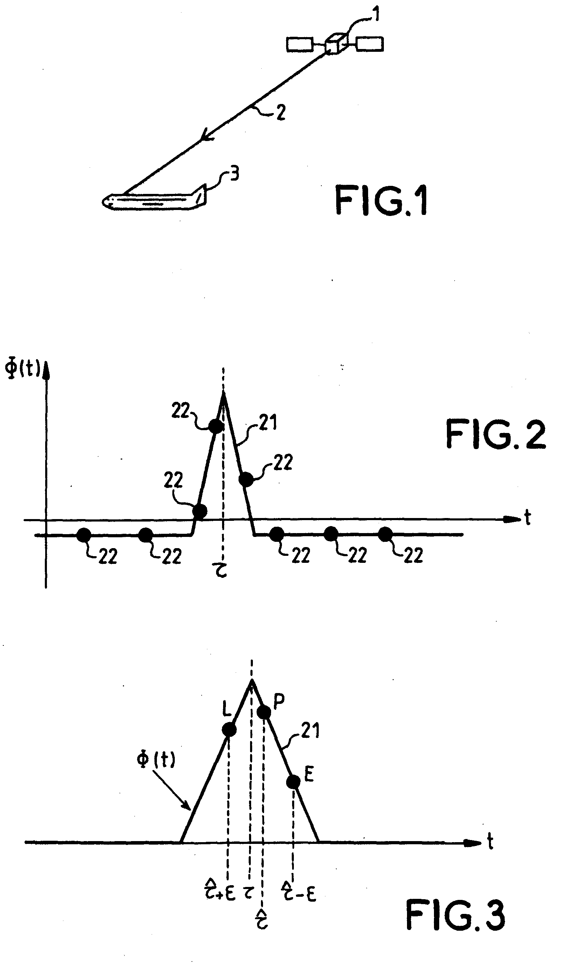

La figure 1 illustre un exemple d'application du positionnement par satellite, par exemple du type GPS. Un satellite 1 émet un signal codé reçu par le récepteur d'un objet 3, par exemple un aéronef, dont la position est à déterminer. Le signal codé est reçu selon un trajet direct 2 uniquement. En l'absence de trajets parasites du signal codé s(t) entre le satellite et le récepteur, ce signal s(t) en entrée du récepteur est généralement modélisé selon la relation suivante :

$$s(t) = A(t)c(t-\tau)e^{2\pi j(F_0+f_d)(t-\tau)} + b(t) \qquad (1)$$

où A(t) représente l'amplitude de l'onde porteuse émise par le satellite, c(t) le code émis par ce même satellite qui module la porteuse, $\tau$ la durée de propagation du signal entre le satellite et le récepteur, $F_0$ la fréquence de l'onde porteuse du signal, fd la fréquence Doppler du signal et b(t) un bruit blanc gaussien.

En ne considérant que le signal démodulé, le signal reçu peut être modélisé selon la relation suivante :

$$s(t) = Ac(t-\tau)e^{2\pi j f_d t} + b(t) \qquad (2)$$

L'amplitude A(t) peut par ailleurs être considérée comme une constante A sur une période de code, par exemple 1ms dans le cas d'un système GPS, ce qui peut correspondre à une réalité opérationnelle dans la mesure où des normes d'émission imposent des fréquences de fluctuation inférieures à 1kHz.

La figure 2 présente, par une courbe 21, l'allure de la fonction de d'intercorrélation $\Phi(t)$ entre le signal reçu par le récepteur de l'objet 3, modélisé selon la relation (2) et la réplique du code en local. Le récepteur calcule la corrélation pour un nombre fini de retards, de telle sorte que dans un premier temps seules des valeurs discrètes 22 de la fonction de corrélation sont obtenues. En particulier, le maximum de la fonction de corrélation qui correspond au retard τ recherché, n'est pas directement défini. Cependant, dans une deuxième étape, il existe des fonctions d'estimations permettant alors de déterminer le maximum de la fonction de corrélation à partir de toutes ou parties de ces valeurs discrètes 22. L'estimation du retard τ est par exemple définie par un algorithme récursif mettant en oeuvre une méthode du type du maximum de vraisemblance.

Plusieurs méthodes d'estimation peuvent donc être utilisées. Néanmoins, quelle que soit la méthode retenue, l'estimation du retard τ est effectuée par une boucle de poursuite du code qui met successivement en oeuvre la démodulation du signal reçu, la détermination de valeurs de corrélation discrètes, l'estimation du maximum de corrélation et enfin un rebouclage permettant la poursuite du retard.

Une méthode connue pour l'estimation du maximum de corrélation fait intervenir un algorithme connu dit de Newton, de type récursif. Cet algorithme se base sur la corrélation du signal reçu avec trois voies appelées communément « Prompt », « Early » et « Late » décalées respectivement d'un retard $\hat{\tau}$, d'un retard $\hat{\tau}$ + ε et d'un retard $\hat{\tau}$ - ε, $\hat{\tau}$ étant la valeur de retard estimée lors de la précédente récurrence de l'algorithme, appelée encore boucle de calcul par la suite.

La figure 3 illustre la fonction la fonction d'intercorrélation Φ(t) pour les trois retards associés aux voies précédentes notées respectivement P, E et L. Le retard τ recherché est proche du retard $\hat{\tau}$ de la précédente récurrence. En fait, l'algorithme est appliqué de telle sorte que l'on part initialement d'un retard quelconque représentant une estimation grossière, qui se rapproche dans une phase transitoire du retard réel, d'une récurrence à l'autre. En régime établi, le retard estimé est proche d'une récurrence à l'autre de l'algorithme. Cet algorithme est décrit dans les lignes qui suivent.

Il se base sur une fonction de vraisemblance V(τ, A₁, A₂, ....A_Np) définie comme suit :

$$V(\tau, A_1, A_2,...A_{Np}) = -\sum_{i=1}^{Np} \int_{(i-1)T_M}^{iT_M} \left|s(t) - A_i c(t-\tau)e^{2\pi jf_d t}\right|^2 dt \qquad (3)$$

Cette fonction maximise la densité de probabilité d'observation du signal reçu d'après le principe de la méthode du maximum de vraisemblance. La valeur A du modèle selon la relation (2) est constante par périodes de code $T_M$, correspondant par exemple à des intervalles de temps d'une milliseconde environ. Pendant ces périodes, A prend successivement les valeurs $A_1, A_2, ...A_i ....A_{Np}$. Ces valeurs peuvent être complexes. On considère par ailleurs que le retard τ est constant pendant la durée d'intégration correspondant à Np périodes de codes $T_M$. Ces Np périodes sur lesquelles le récepteur estime le retard τ forment une boucle de calcul, un nouveau retard est estimé pour chaque boucle.

Ce retard τ recherché est en fait le retard qui maximise cette fonction de vraisemblance, tout en étant par ailleurs l'argument qui maximise la fonction d'intercorrélation Φ(τ) entre le signal reçu et la réplique du code. En particulier, la dérivée partielle de la fonction de vraisemblance V par rapport à τ est nulle.

En notant, pour la période d'ordre i parmi les Np périodes d'intégration :

$$s(t)-A_i c(t-\tau)e^{2\pi jf_d t} = Z_i \qquad (4)$$

Il vient :

$$V(\tau, A_1, A_2,...A_{Np}) = -\sum_{i=1}^{Np} \int_{(i-1)T_M}^{iT_M} Z_i Z_i^* dt \qquad (5)$$

On montre alors aisément que :

$$\frac{\partial V(\tau)}{\partial \tau} = 2\text{Re}\left\{\sum_{i=1}^{Np} A_i^* \frac{\partial S_i(\tau)}{\partial \tau}\right\} \qquad (6)$$

$A_i{}^*$ représentant la valeur conjuguée de $A_i$ et Re la partie réelle de l'expression entre parenthèses.

La fonction $S_i(\tau)$ étant définie par la relation suivante :

$$S_i(\tau) = \int\limits_{(i-1)T_M}^{iT_M} s(t)c(t-\tau)e^{-2\pi jf_d t}dt \qquad (7)$$

La fonction d'intercorrélation $\phi(\tau)$ est de son côté définie sur une période d'intégration $NpT_M$ par

$$\phi(\tau) = \int\limits_{0}^{NpT_M} s(t)A(t)c(t-\tau)e^{-2\pi jf_d t}dt \,,$$

ce qui peut encore s'exprimer par

$$\phi(\tau) = \sum_{i=1}^{Np} A_i S_i(\tau).$$

Il s'ensuit que la dérivée de la fonction de vraisemblance par rapport à T fait intervenir la dérivée de la fonction d'intercorrélation $\phi(\tau)$.

Le retard $\hat{\tau}$ recherché vérifie donc :

$$2Re\left\{ \sum_{i=1}^{Np} A_i^* \frac{\partial S_i\left(\hat{\tau}\right)}{\partial \tau} \right\} = 0 \qquad (8)$$

Le retard $\tau$ n'intervient pas d'une manière explicite dans la relation (8), mais sous la forme $c(t - \tau)$. Il faut donc définir un algorithme permettant d'obtenir le retard $\tau$ estimé. On peut donc faire appel à une solution du type algorithme récursif.

Pour une récurrence ou boucle donnée d'ordre n+1 de l'algorithme on calcule la fonction $S_i$ définie selon la relation (7) pour les voies P, E et L en prenant en compte le retard $\hat{\tau}_n$ estimé lors de la récurrence d'ordre n, soit :

$$S_i\left(\hat{\tau}_n\right) = Q_{Pi} + jI_{Pi} \qquad (9)$$

$$S_i\left(\hat{\tau}_n - \varepsilon\right) = Q_{Ei} + jI_{Ei} \qquad (9')$$

$$S_i\left(\hat{\tau}_n + \varepsilon\right) = Q_{Li} + jI_{Li} \qquad (9'')$$

On peut alors démontrer que le retard $\hat{\tau}_{n+1}$ estimé à la récurrence n+1 s'obtient en fonction du retard $\hat{\tau}_n$ de la récurrence n selon la relation suivante :

$$\hat{\tau}_{n+1} = \hat{\tau}_n - (1 - \frac{\varepsilon}{T}) \frac{\sum\limits_{i=1}^{Np} (\sqrt{Q_{Ei}^2 + I_{Ei}^2} - \sqrt{Q_{Li}^2 + I_{Li}^2})}{\sum\limits_{i=1}^{Np} (\sqrt{Q_{Ei}^2 + I_{Ei}^2} + \sqrt{Q_{Li}^2 + I_{Li}^2})} T \qquad (10)$$

où T est la durée d'un chip ou période de symbole de code.

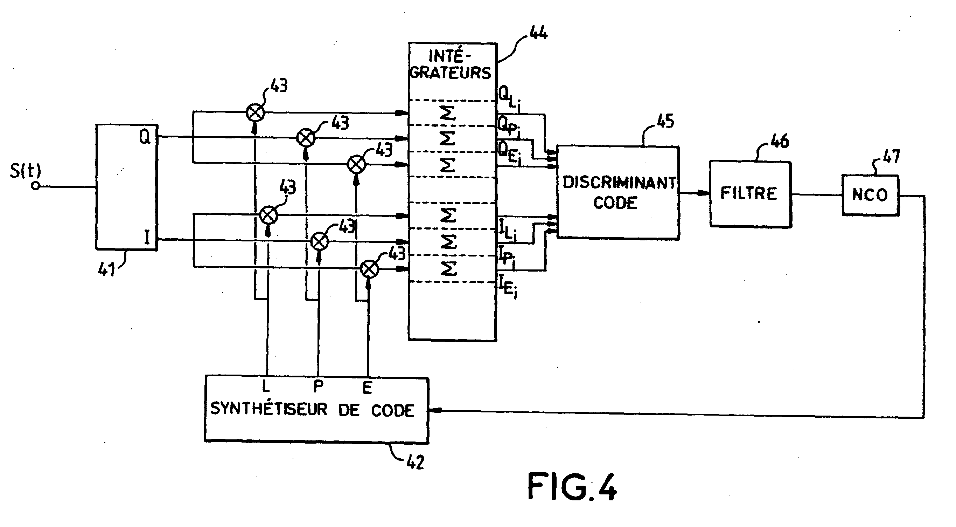

La boucle à verrouillage de code d'un récepteur peut alors être décrite sous forme synoptique par la figure 4. Cette boucle comporte en entrée un échantillonneur complexe 41 qui reçoit le signal utile S(t) émis par le satellite, mis sous forme numérique. Communément ce signal est transposé dans une fréquence de travail dite fréquence intermédiaire. Les moyens de démodulation qui permettent d'obtenir le signal utile S(t) ne sont pas représentés, car sont bien connus. L'échantillonneur fournit un signal en phase sur sa sortie I et un signal en quadrature sur sa sortie Q correspondant respectivement à la partie de signal dite réelle et à la partie de signal dite imaginaire. Un synthétiseur de code 42 comporte la réplique du code émis par le satellite émetteur. Plus précisément, il comporte trois fois la réplique du code, avec des retards respectifs de $\hat{\tau}_n+\varepsilon$, $\hat{\tau}_n$, $\hat{\tau}_n-\varepsilon$ pour les voies E, P et L. Il devrait fournir les codes Aic $(t-\hat{\tau}_n -\varepsilon)e^{2\pi jf_dt}$, $A_ic(t-\hat{\tau}_n)e^{2\pi jf_dt}$ et $A_ic(t-\hat{\tau}_n +\varepsilon)e^{2\pi jf_dt}$ sous forme échantillonnée. Comme les amplitudes $A_i$ n'interviennent pas dans l'expression des fonctions Si des relations (9), (9'), (9') utilisées dans l'algorithme, le synthétiseur ne fournit donc que $c(t-\hat{\tau}_n -\varepsilon)e^{2\pi jf_dt}$, $c(t-\hat{\tau}_n)e^{2\pi jf_dt}$ et $c(t - \hat{\tau}_n + \varepsilon)e^{2\pi jf_dt}$.

Des multiplieurs numériques 43 multiplient les parties réelles et imaginaires du signal échantillonné avec les sorties L, P, E du synthétiseur. Les sorties des multiplieurs attaquent les entrées de moyens d'intégration 44 qui calculent les parties réelles et imaginaires des fonctions Si conformément aux relations (9), (9'), (9") pour chacune des périodes TM de code, pour i compris entre 1 et Np. Ces moyens 44 sont suivis de moyens de discrimination de code 45 qui calculent pour une boucle d'ordre n+1, l'expression $\hat{\tau}_{n+1} - \hat{\tau}_n$ définie par la relation (10). Ces moyens permettent donc d'estimer le retard $\hat{\tau}_{n+1}$, connaissant le retard estimé immédiatement antérieur $\hat{\tau}_n$. Eventuellement, des moyens de filtrage 46 permettent d'effectuer un lissage des retards estimés pour notamment supprimer des fluctuations parasites du retard au cours du temps. Le retard $\hat{\tau}_{n+1}$ est injecté dans le synthétiseur de code pour les calculs de la boucle suivante d'ordre n+2. Plus particulièrement, le retard $\hat{\tau}_{n+1}$ est par exemple présent à l'entrée d'un oscillateur à commande numérique 47 qui alimente le synthétiseur de code 42. L'oscillateur est par ailleurs commandé par une horloge non représentée, fonctionnant par exemple à une fréquence de l'ordre de 20 Mhz. Cet oscillateur 47 fournit alors des signaux de calage au synthétiseur 42 en fonction du retard $\hat{\tau}_{n+1}$. Cela permet notamment le calage temporel des échantillons de code produits par le synthétiseur.

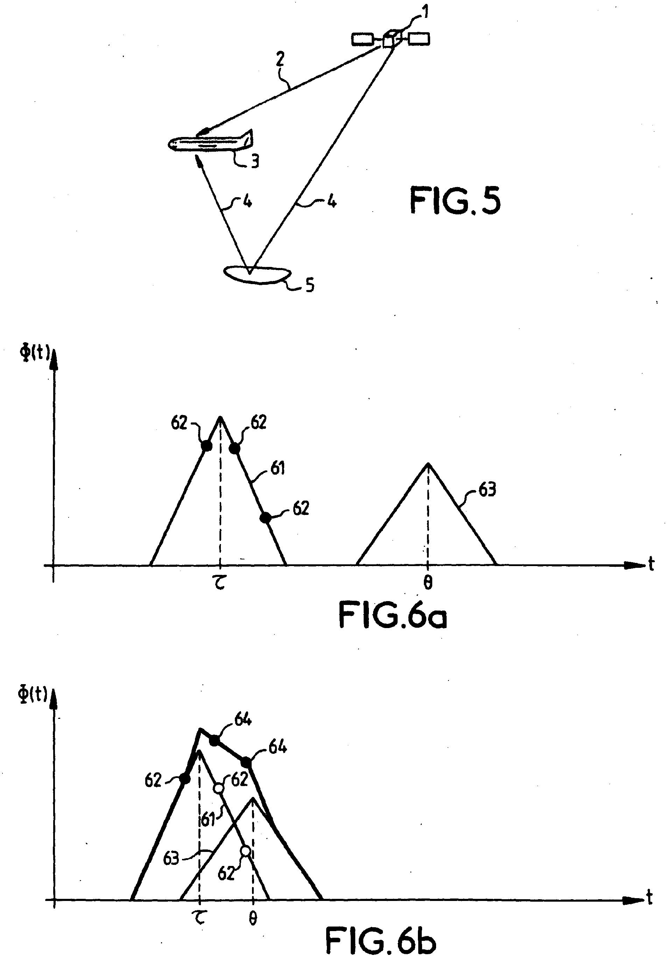

La figure 5 illustre l'exemple de situation de la figure 1 mais dans un cas où un trajet parasite 4 du signal codé entre le satellite 1 et le récepteur s'ajoute au trajet direct 2. Ce trajet parasite peut être dû à la réflexion du signal émis par le satellite sur la surface proche de l'antenne de réception. La figure 5 illustre un cas où la réflexion du signal émis par le satellite est spéculaire, c'est-à-dire qu'il n'y a qu'un seul trajet parasite. Au modèle tel que défini par la relation (2) précédente, il faut ajouter dans ce cas une partie correspondant au trajet parasite. Le nouveau modèle du signal s(t) reçu est alors généralement défini par la relation suivante :

$$s(t) = Ac(t-\tau)e^{2\pi jf_dt} + ac(t-\tau)e^{2\pi jf'_dt} + b(t) \qquad (11)$$

Le premier terme du modèle correspond au trajet direct, il est identique à celui de la relation (2). Le deuxième terme possède la même structure, l'amplitude A est remplacée par l'amplitude a du signal parasite, le retard $\tau$ du signal direct est remplacé par le retard $\theta$ du signal parasite et la fréquence Doppler $f_d$ est remplacée par la fréquence Doppler f'd du signal parasite. Le bruit gaussien b(t) demeure.

Les figures 6a et 6b illustrent l'influence du retard $\theta$, donc du trajet parasite, sur la fonction d'intercorrélation $\Phi$ entre un signal reçu et le code tel que modélisé par la relation (11). Sur la figure 6a, une première courbe 61 représente la fonction d'intercorrélation due au seul trajet direct. Le maximum est obtenu par exemple par estimation à partir de trois échantillons 62 comme indiqué précédemment par un algorithme du type récursif. Une deuxième courbe 63 illustre la fonction de corrélation due au trajet parasite. Si le retard $\theta$ est suffisamment éloigné du retard $\tau$ comme l'illustre la figure 6a, les deux courbes de corrélation n'interfèrent pas et le maximum de corrélation correspondant au retard $\tau$ peut être défini sans erreur. La figure 6b correspond au cas où le trajet direct et le trajet parasite sont proches, le retard $\theta$ est alors proche du retard T. Dans ce cas, le signal parasite interfère avec le signal direct pour la détermination du maximum de corrélation, c'est-à-dire que les points de corrélation échantillonnés 64 ne correspondent plus à ceux de la figure 6a relatifs au seul trajet direct. Il en résulte une erreur systématique de détermination du retard T, la méthode d'estimation étant identique à celle appliquée au seul trajet direct comme illustré par la figure 1. En particulier, l'algorithme récursif tel que défini précédemment ne prend pas en compte l'existence du ou des trajets parasites dans la définition des fonctions $S_i$.

Etant donné que la base des courbes représentatives 61, 63 formant triangle est de l'ordre de un à deux chips T, il en résulte qu'un trajet parasite a un effet perturbateur seulement si son temps de retard $\theta$ diffère du temps de retard T du trajet direct dans l'ordre de grandeur d'un ou deux chip. A titre d'exemple, si l'erreur atteint par exemple 0,3T, T valant environ 1µs, l'erreur de positionnement est alors d'environ 100 m. T représente la durée d'un symbole de codage, c'est-à-dire en fait la durée d'un bit d'une séquence pseudo-aléatoire. Cette durée, qui est généralement appelée « chip » dans la littérature anglo-saxonne, correspond approximativement à une distance de 300 mètres parcourue par le signal.

Dans le cas d'une réflexion diffuse, plusieurs trajets parasites s'ajoutent au trajet direct. En notant P le nombre de ces trajets, un modèle du sianal codé est généralement donné par la relation suivante :

$$s(t) = Ac(t-\tau)e^{2\pi jf_d t} + \sum_{k=1}^{P} a_k c(t-\theta_k)e^{2\pi jf_k t} + b(t) \qquad (12)$$

où A, $\tau$, et $f_d$ représentent les mêmes grandeurs que précédemment, $a_k$ l'amplitude du signal réfléchi d'ordre k, $\theta_k$ le retard de ce kième signal et $f_k$ sa fréquence Doppler.

$$\sum_{k=1}^{P} a_k c(t-\theta_k)e^{2\pi jf_k t}$$

représente la participation des P trajets parasites.

Le modèle étant différent du cas de réflexion spéculaire, la méthode d'estimation du retard T par estimation du maximum de corrélation est différente. Mais par ailleurs, l'erreur de positionnement systématique demeure. Une des difficultés à traiter dans ce cas provient aussi du fait que le nombre P de trajets parasites est souvent inconnu, et par ailleurs important.

Les essais et relevés expérimentaux réalisés par la Déposante ont montré que les distributions de puissance des signaux direct et réfléchis dans le domaine temporel et spectral sont respectivement modélisables par des lois exponentielles décroissante et gaussienne. Grâce à ces propriétés et notamment aux ordres de grandeurs observés, la Déposante a montré que la contribution des signaux réfléchis peut être modélisée par un seul signal codé p(t) retardé d'un retard $\theta$ et dont l'amplitude est une fonction z(t).

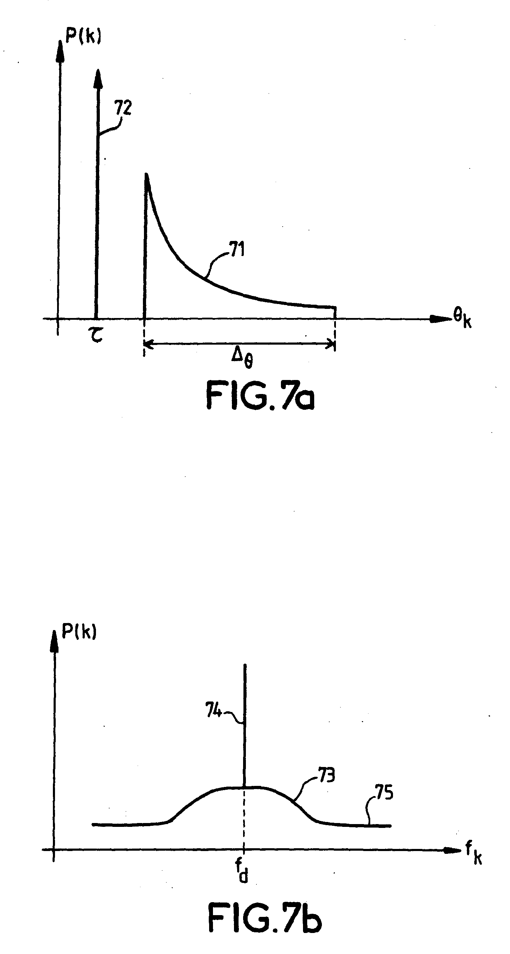

Les relevés expérimentaux ont donc montré les fonctions de répartitions temporelle et spectrale illustrées respectivement par les figures 7a et 7b. La figure 7a illustre la distribution des puissances P(k) des signaux parasites en fonction de leurs retards $\theta_k$ par une courbe exponentielle décroissante 71, une impulsion 72 représentant par ailleurs la puissance du signal direct de retard $\tau$. Pour un signal parasite donné d'ordre k, la puissance P(k) est $|a_k|^2$. Les signaux parasites qui affectent l'estimation du retard ont en fait des retards $\theta_k$ compris dans un espace de temps $\Delta\theta$ inférieur à la durée T d'un symbole de code. Ce qui peut par exemple se traduire, quel que soit j, k, par :

$$|\theta_k - \theta_j| < T \qquad (13)$$

La courbe 7b illustre la répartition de puissance P(k) des signaux parasites en fonction de leurs fréquences Doppler $f_k$ par une courbe 73, une impulsion 74 représentant par ailleurs la puissance du signal direct à la fréquence Doppler $f_d$. Un niveau de puissance constant 75 représente de son côté du bruit thermique ambiant. De la courbe 73 représentative de la répartition spectrale de puissance des signaux parasites, il ressort par exemple que, quel que soit l'ordre k du signal parasite, :

$$|f_k - f_d| < 1 \text{ kHz} \qquad (14)$$

Ainsi, selon l'invention, grâce aux propriétés précitées et notamment aux ordres de grandeurs observés, la contribution de tous les signaux réfléchis peut être modélisée par un seul signal codé p(t), appelé par la suite signal équivalent, retardé d'un seul signal θ selon la relation suivante :

$$p(t) = z(t)c(t - \theta)e^{2\pi j(F_0 + f_d)t} \tag{15}$$

ou encore, en ne considérant que le signal démodulé :

$$p(t) = z(t)c(t - \theta)e^{2\pi j f_d t} \tag{16}$$

z(t) est l'amplitude du signal codé dont la bande passante peut être limitée à 1 kHz, en raison notamment de la relation (13).

En fait, le modèle p(t) représente l'influence globale des signaux parasites à une erreur e(t) près. La déposante a vérifié qu'il existe un retard $\theta_{min}$ qui rend cette erreur de modélisation e(t) négligeable, ou en d'autres termes que pour $z(t)c(t-\theta_{min})e^{2\pi j f_d t}$ l'erreur e(t) est très faible. La déposante a montré que ce retard $\theta_{min}$ est la valeur barycentrique des retards $\theta_k$ des signaux réfléchis pondérés par la puissance $|a_k|^2$ de ces signaux, soit :

$$\theta_{min} = \frac{\sum_{k=1}^{P} |a_k|^2 \theta_k}{\sum_{k=1}^{P} |a_k|^2} \tag{17}$$

En prenant en compte le modèle du signal direct tel que proposé par la relation (2) et celui des signaux parasites tel que proposé par la relation (16), le modèle du signal global s(t), direct et parasites, est selon l'invention :

$$s(t) = A(t)c(t - \tau)e^{2\pi j f_d t} + z(t)c(t - \theta)e^{2\pi j f_d t} + b(t) \tag{18}$$

Un récepteur selon l'invention s'appuie donc sur un tel modèle (18). Ce modèle s(t) est mémorisé dans les moyens de traitement du récepteur. Le modèle (18) unifie par un modèle unique les cas de réflexions spéculaires et diffuses, en même temps qu'il simplifie la représentation physique du signal codé. Dans le cas spéculaire, la relation (18) peut en effet être identifiée à la relation (11).

Il est possible de faire comme hypothèse que z(t), comme A, est constante par périodes $T_M$ de code, par exemple par morceaux d'une milliseconde. On peut aussi supposer que τ et θ sont constants pendant la durée d'intégration, c'est-à-dire pendant $NpT_M$, Np étant le nombre de périodes de code traitées pendant cette durée d'intégration ou boucle de calcul. Une fonction d'estimation algorithmique telle que présentée précédemment dans le cas où il n'y a pas de trajet parasite est complexe à mettre au point car le nombre d'inconnues a doublé, du fait des deux retards T et θ à prendre en compte, au lieu du seul retard τ.

La déposante a fait une analyse des équations aux dérivées partielles d'une fonction de vraisemblance qui a montré que dans le cas simplifié où les amplitudes du signal direct et du signal équivalent sont connues, le problème peut être traité par deux boucles de poursuite de code opérant en parallèle.

Selon l'invention, pour estimer le retard τ, on définit par exemple la fonction de vraisemblance par la relation (19) suivante :

$$V(\tau, \theta, A_1, ... A_{Np}, z_1, ... z_{Np}) = -\sum_{i=1}^{Np} \int_{(i-1)T_M}^{iT_M} \left| s(t) - A_i c(t - \tau)e^{2\pi j f_d t} - z_i c(t - \tau)e^{2\pi j f_d t} \right|^2 dt$$

Par analogie à ce qui a été présenté précédemment dans un cas sans trajet parasite, on définit les fonctions $S'_i(\tau)$ et $S''_i(\theta)$ comme suit :

$$S_i'(\tau) = \int_{(i-1)T_M}^{iT_M} \left[ s(t)e^{-2\pi jf_d t} - z_i c(t - \hat{\theta}) \right] c(t - \tau)dt \qquad (20)$$

$$S_i''(\theta) = \int_{(i-1)T_M}^{iT_M} \left[ s(t)e^{-2\pi jf_d t} - A_i c(t - \hat{\tau}) \right] c(t - \theta)dt \qquad (21)$$

Les dérivées partielles de la fonction de vraisemblance V par rapport à $\tau$ et par rapport à $\theta$ doivent être nulles pour les retards estimés $\hat{\tau}$ et $\hat{\theta}$. Ces dérivées partielles sont calculées de façon analogue à celle de la relation (6), elles sont donc définies par les relations suivantes :

$$\frac{\partial V(\tau, \theta)}{\partial \tau} = 2\text{Re}\left\{ \sum_{i=1}^{Np} A_i^* \frac{\partial S_i'(\tau)}{\partial \tau} \right\} \qquad (22)$$

$$\frac{\partial V(\tau, \theta)}{\partial \theta} = 2\text{Re}\left\{ \sum_{i=1}^{Np} z_i^* \frac{\partial S_i''(\theta)}{\partial \theta} \right\} \qquad (23)$$

Il faut donc

$$\frac{\partial V\left(\hat{\tau}, \hat{\theta}\right)}{\partial \tau} = 0 \qquad \text{et} \qquad \frac{\partial V\left(\hat{\tau}, \hat{\theta}\right)}{\partial \theta} = 0$$

Un algorithme récursif de Newton tel qu'utilisé précédemment dans le cas d'un seul trajet direct devient très difficile à mettre en oeuvre dans ce cas à trajets parasites notamment parce que la résolution d'une équation récurrente du type de celle de la relation (10) nécessiterait d'inverser des matrices complexes. Une grande puissance de calcul serait en particulier indispensable.

Avantageusement, l'invention permet de déterminer le retard estimé $\hat{\tau}$ du trajet direct sans faire appel à un tel algorithme. L'analyse des équations aux dérivées partielles de la fonction de vraisemblance faite par la Déposante a donc permis de montrer que dans le cas simplifié où les amplitudes des signaux direct et équivalent, A et z, étaient connues, le problème pouvait être traité par deux boucles de poursuite de code opérant en parallèle. Selon l'invention, une estimation de retard sur le trajet direct en présence de trajets parasites est obtenue en dupliquant une structure existante, par exemple du type de celle de la figure 4, et en rajoutant un module d'estimation des amplitudes. Ayant en mémoire le modèle du signal d'entrée s(t) selon la relation (18), un récepteur selon l'invention estime les amplitudes A et z, puis « déconvolue » le signal d'entrée par les contributions du signal direct sur une voie et du signal équivalent sur une autre voie afin d'assurer la poursuite des retards T et θ sur deux voies distinctes. La mesure du retard θ n'est pas utile directement pour le positionnement du récepteur mais permet d'assurer la déconvolution du signal reçu par le signal équivalent et permet ainsi l'estimation du retard T.

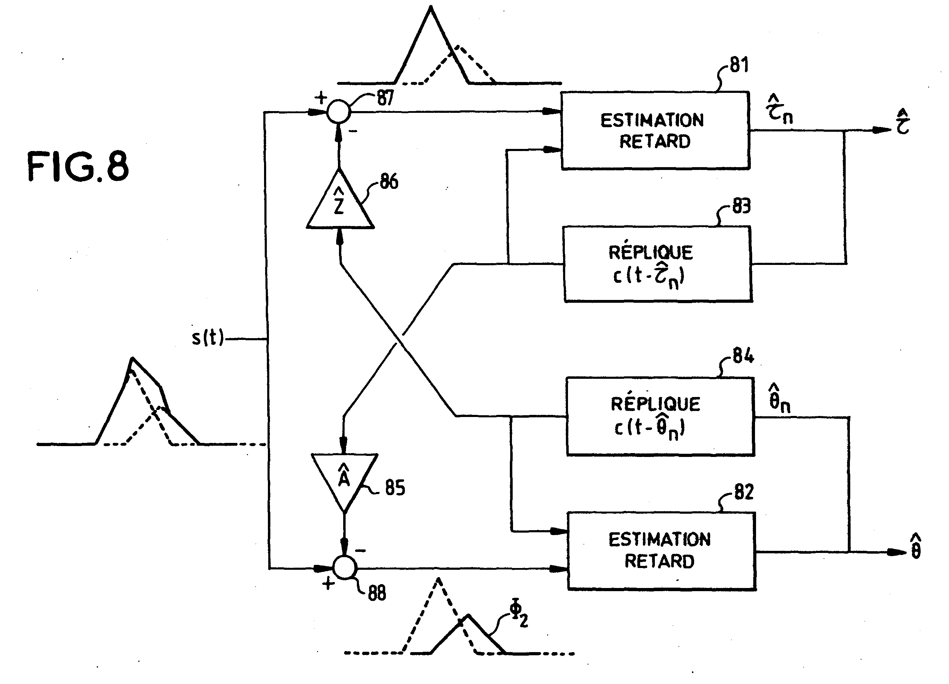

La figure 8 illustre par un synoptique ce principe de fonctionnement d'un dispositif selon l'invention. On suppose que l'on est dans une boucle de traitement en régime établi, d'ordre n. Le signal s(t) est modélisé selon la relation (18), soit $s(t) = A(t)c(t - \tau)e^{2\pi jf_d t} + z(t)c(t - \theta)e^{2\pi jf_d t} + b(t)$. Le récepteur comporte des moyens d'estimation 81 du retard $\hat{\tau}_n$ et des moyens d'estimation 82 du retard $\hat{\theta}_n$. Ces moyens sont des moyens d'estimation classiques, par exemple du type de ceux de la figure 4, mettant en oeuvre un algorithme du type récursif de Newton. Ces moyens d'estimation 81, 82 fonctionnent en parallèle. Le retard du trajet direct $\hat{\tau}_n$ estimé dans la boucle d'ordre n est appliqué comme retard pour le déroulement de la réplique du code 84, soit $c(t - \hat{\tau}_n)$. De même, le retard du trajet parasite équivalent $\hat{\theta}_n$ estimé dans la boucle d'ordre n est appliqué comme retard pour le déroulement de la réplique du code 83, soit $c(t - \theta n)$. La réplique du code $c(t - \hat{\tau}_n)$, par ailleurs utilisée pour une intercorrélation dans les moyens d'estimation 81 du retard direct, est multipliée 85 par l'amplitude connue Â, en fait estimée. De même, la réplique du code $c(t - \hat{\theta}n)$, par ailleurs utilisée par les moyens d'estimation 82 du retard parasite équivalent, est multipliée 86 par l'amplitude estimée z du signal équivalent. Le signal $zc(t - \theta_n)$ est retranché au signal $s(t)$ par des premiers moyens de soustraction 87 et le signal Â $c(t - \tau_n)$ est retranché à ce même signal par des deuxièmes moyens de soustraction 88. Ainsi, sur une première voie comportant les moyens d'estimation 81 du retard direct $\tau$ la contribution du trajet équivalent est retirée du signal $s(t)$ selon la relation (20). Ces moyens d'estimation permettent donc d'obtenir à leur sortie le retard estimé $\tau_{n+1}$ à partir du retard $\tau_n$ obtenu dans la boucle de traitement précédente. De même, sur une deuxième voie comportant les moyens d'estimation 82 du retard parasite équivalent $\theta$ la contribution du trajet direct est retirée du signal $s(t)$ selon la relation (21), ce qui permet d'obtenir le retard parasite équivalent $\theta_n$. Ce dernier n'a pas particulièrement d'intérêt physique, mais sert à déterminer le retard $\tau_{n+1}$.

En particulier, les retards $\tau_{n+1}$ et $\theta_{n+1}$ sont obtenus selon la relation (10), mais dans ce cas, les grandeurs $Q_{Ei}$, $I_{Ei}$, $Q_{Li}$ et $I_{Li}$ sont définies à partir de la relation (20) pour $\tau_{n+1}$ et à partir de la relation (21) pour $\theta_{n+1}$, respectivement comme étant les parties réelles et imaginaires des fonctions $S'_i$ et $S''_i$ pour chaque période de code.

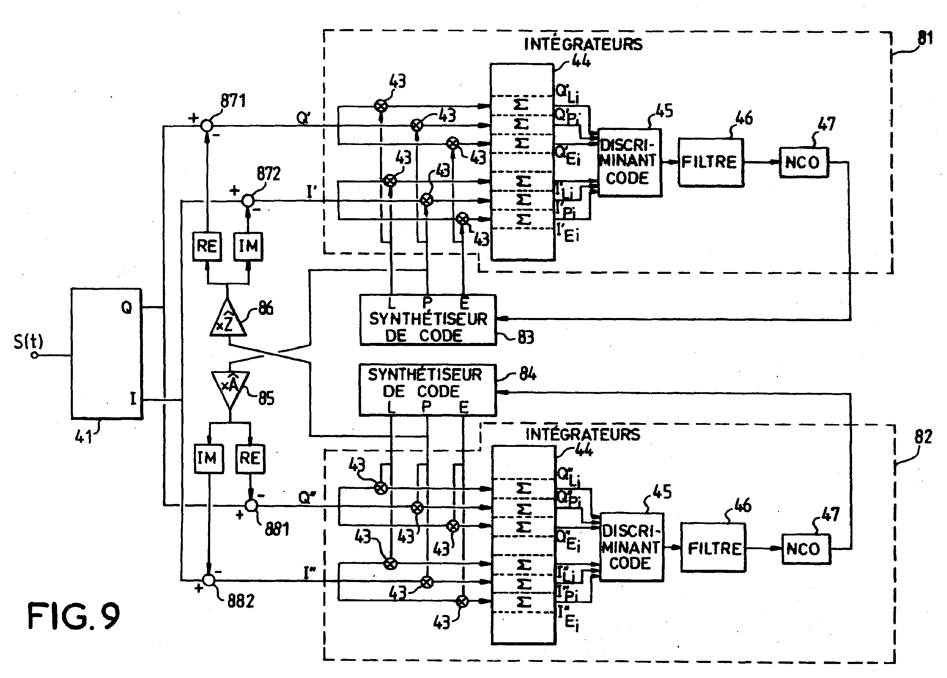

La figure 9 illustre par un synoptique un exemple de réalisation d'une boucle de poursuite de code d'un récepteur selon l'invention fonctionnant selon le schéma de la figure 8. Cette boucle comporte en entrée un échantillonneur complexe 41. La sortie réelle Q de cet échantillonneur attaque l'entrée positive de premiers moyens de soustractions 871 et de deuxièmes moyens de soustraction 881. De même la sortie imaginaire I attaque l'entrée positive de troisièmes moyens de soustractions 872 et de quatrièmes moyens de soustraction 882. Les premiers et troisièmes moyens 871, 872 retranchent respectivement la partie réelle et la partie imaginaire du signal $zc(t - \theta_n)$ au signal Q et au signal I pour donner des signaux Q' et I'. De même, les deuxièmes et quatrièmes moyens de soustraction 881, 882 retranchent respectivement la partie réelle et la partie imaginaire du signal Â $c(t - \tau_n)$ au signal Q et au signal I pour donner des signaux Q" et I". La boucle à verrouillage de code comporte deux voies d'estimation de retard 81, 82 qui fonctionnent en parallèle. Ces moyens d'estimation ont par exemple une architecture semblable aux moyens d'estimation tels qu'illustrés par la figure 4. Les premiers moyens 81 traitent les signaux Q', I' et deuxièmes moyens 82 traitent les signaux Q", I" comme les moyens d'estimation de la figure 4 traitent les signaux Q, I. Les premiers moyens d'estimation 81 fournissent par exemple le retard direct $\tau_n$ et les deuxièmes moyens d'estimation 82 fournissent par exemple le retard parasite équivalent $\theta n$.

La sortie des moyens d'estimation 81, 82 alimentent chacun un synthétiseur de code 83, 84 qui échantillonne par exemple les signaux des voies L, P et E définies précédemment. La voie P qui déroule la réplique du code non retardé ou avancé de $\varepsilon$, soit $c(t - \tau_n)$, est rebouclée sur le signal d'entrée. En ce qui concerne le signal P de la première voie, celui-ci attaque des moyens de multiplication 85 qui le multiplie par l'amplitude Â du signal direct pour produire Âc$(t - \tau_n)$ en entrée des deuxièmes et quatrièmes moyens de soustraction 881, 882. En ce qui concerne le signal P de la deuxième voie, celui-ci attaque des moyens de multiplication 86 qui le multiplie par l'amplitude z du signal parasite équivalent pour produire $zc(t - \theta_n)$ en entrée des premiers et troisièmes moyens de soustraction 871, 872.

Les amplitudes du signal direct A et du signal équivalent z peuvent être définies par leurs valeurs $A_i$ et $z_i$ sur les périodes de code successives à l'intérieur d'une boucle de traitement. La fonction de vraisemblance a des dérivées partielles nulles pour les arguments $\tau$, $\theta$ ...$A_i$, ...$z_i$ ... qui correspondent à son maximum. Ainsi, quelle que soit la période de code d'ordre i, les dérivées partielles de cette fonction V par rapport à $A_i$ et par rapport à $z_i$ doivent êtres nulles, soit :

$$\frac{\partial V(\tau,\theta,A_1,...A_{Np},z_1,...z_{Np}) = 0}{\partial A_i} \tag{24}$$

$$\frac{\partial V(\tau,\theta,A_1,...A_{Np},z_1,...z_{Np})= 0}{\partial z_i} \tag{25}$$

Il en résulte que les amplitudes estimées $A_i$ et $z_i$ peuvent être données par les relations suivantes :

$$\hat{A}_i = \frac{\phi(\hat{\theta}-\hat{\tau})S_i(\theta)-\rho_c S_i(\hat{\tau})}{\phi(\hat{\theta}-\hat{\tau})^2-\rho_c^2} \tag{26}$$

$$\hat{z}_i = )\frac{\phi(\hat{\theta}-\hat{\tau})S_i(\hat{\tau})-\rho_c S_i(\theta}{\phi(\hat{\theta}-\hat{\tau})^2-\rho_c^2} \tag{27}$$

où

$$- \rho_c = \int_0^{NpT_M} c(t)^2 \, dt \qquad\qquad (28)$$

- $S_i$ est définie selon la relation (7)
- $\Phi$ est la fonction d'intercorrélation entre le signal reçu et le code
- les retards estimés $\tau$ et $\theta$ sont notés sans indice n, car les relations (26) et (27) sont utilisées pour toutes les boucles.

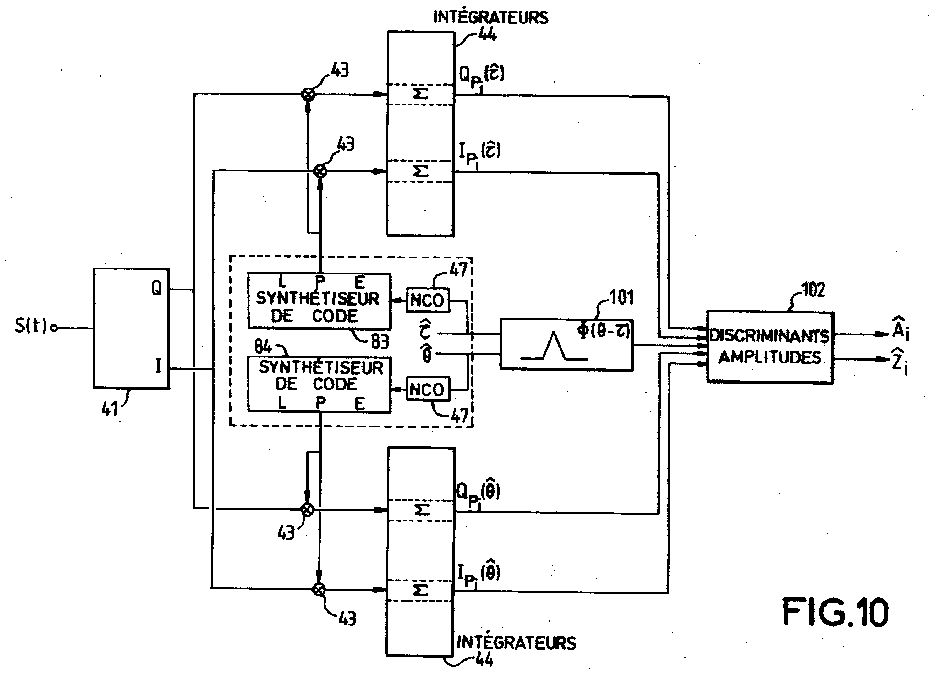

La figure 10 illustre un exemple de réalisation d'un module d'estimation des amplitudes. Celui-ci peut être inclus en partie dans le circuit de la boucle à verrouillage de code. Les moyens d'intégration 44 des voies d'estimation peuvent par exemple calculer les grandeurs $S_i(\tau) = Q_{Pi}(\tau) + jI_{Pi}(\tau)$ pour la voie directe et $S_i(\theta) = Q_{Pi}(\theta) + jI_{Pi}(\theta)$ pour la voie parasite, à partir des voies P des synthétiseurs de code 83, 84. Des moyens 101 permettent par exemple de calculer la fonction d'intercorrélation $\Phi$ pour l'argument $\tau$-$\theta$. Des moyens 102, appelés discriminants d'amplitudes permettent à partir des données précédentes de calculer les amplitudes $A_i$ et $Z_i$ selon les relations (26) et (27). Ces grandeurs sont ensuite prises en compte par les moyens de multiplication 85, 86.

En pratique, on peut par exemple définir des seuils pour lesquels le trajet parasite équivalent n'est pas pris en compte. En particulier on peut négliger le signal parasite équivalent si le rapport

$$\frac{Z_n}{A_n}$$

de l'amplitude du signal parasite équivalent sur le signal direct est inférieur à un seuil donné. Par exemple, on peut considérer que :

$$\hat{z}_n = 0 \quad \text{si} \quad \left( \frac{\hat{z}_n}{\hat{A}_n} \right)_{dB} \leq -12\text{dB} \qquad\qquad (29)$$

L'invention permet donc à partir d'un modèle simple du signal reçu au niveau du récepteur, de mettre en oeuvre un algorithme de détermination du retard du trajet direct $\tau$. Cet algorithme n'exige pas une puissance de calcul excessive. Il peut être mis en oeuvre aisément à partir de circuits d'estimation utilisés pour le cas simple où il n'y a pas de signaux parasites réfléchis. En particulier, lorsque aucun signal parasite ne survient, l'algorithme peut être utilisé sans modification et garde toutes ses performances. Un algorithme d'estimation du retard direct à partir d'un modèle selon l'invention a été décrit ici, d'autres types d'algorithmes peuvent bien sûr être mis en oeuvre, notamment en fonction des contraintes de calculs admises. Un tel algorithme donnerait le retard recherché T du signal direct, et le retard $\theta$ du signal parasite équivalent.

## Revendications

1. Récepteur pour système de positionnement par satellites, un satellite émettant une onde codée, le code formant le signal utile étant du type pseudo-aléatoire répétitif et modulant une onde porteuse, la distance du récepteur au satellite étant déterminée par le temps de propagation ($\tau$) de l'onde du satellite au récepteur, le récepteur mémorisant et déroulant une réplique du code selon un modèle, le temps de propagation étant estimé dans une boucle de poursuite de code comme étant le retard qui maximise une fonction d'intercorrélation entre le signal utile reçu par le récepteur selon un trajet direct depuis le satellite et la réplique du code, caractérisé en ce que le modèle du signal utile s(t) en entrée du récepteur est défini en fonction du temps t par :

$$s(t) = A(t)c(t-\tau)e^{2\pi jf_d t} + z(t)c(t-\theta)e^{2\pi jf_d t} + b(t)$$

où :

- A(t)c(t - $\tau$)t$^{2\pi j f_d t}$ modélise le signal direct du satellite au récepteur ;
- z(t)c(t$\theta$0)e$^{2\pi j f_d t}$ modélise un signal équivalent à des signaux parasites réfléchis par une surface ;
- b(t) représente un bruit gaussien ;

c(t) représentant le code et A(t) et z(t) ses amplitudes respectives pour le signal direct et pour le signal équivalent, fd représentant la fréquence Doppler du signal direct, $\tau$ représentant le retard du signal direct et $\theta$ le retard du signal équivalent.

2. Récepteur selon la revendication 1, caractérisé en ce que le retard $\tau$ étant estimé sur Np périodes de code TM formant une boucle, le récepteur comportant des moyens pour déterminer les amplitudes A et z des signaux direct et équivalents du modèle, le récepteur comporte des premiers moyens d'estimation (81) qui déterminent le retard $\tau_{n+}$1 du signal direct en fonction du retard $\tau_n$ défini dans une boucle d'ordre n précédente et des deuxièmes moyens d'estimation (82) qui déterminent le retard $\theta_{n+1}$ du signal parasite équivalent en fonction du retard $\theta_n$ défini dans la boucle précédente, ces moyens d'estimation fonctionnant en parallèle, les premiers moyens d'estimation (83) estimant le retard $\tau_{n+1}$ en fonction d'une réplique du code c(t-$\tau_n$) affectée du retard $\tau_n$ et du signal utile auquel a été retranchée la contribution du signal parasite équivalent z(t - $\theta_n$) du modèle, les deuxièmes moyens d'estimation (84) estimant le retard $\theta_{n+1}$ en fonction d'une réplique du code c(t - $\theta$n) affectée du retard On et du signal utile auquel a été retranchée la contribution du signal direct A(t - $\tau_n$) du modèle.

3. Récepteur selon la revendication 2, caractérisé en ce que sur les Np périodes de code d'une boucle, l'amplitude A du signal direct prenant les valeurs successives A$_1$, A2, ...A$_i$ ...A$_{Np}$ et l'amplitude z du signal parasite équivalent prenant les valeurs successives z$_1$, z$_2$, ...z$_i$ ...z$_{Np}$, les retards $\tau_{n+1}$ et $\theta_{n+1}$ sont définis dans une boucle d'ordre n+1 par les moyens d'estimation (81, 82) par application d'un algorithme récursif selon les relations suivantes :

$$\hat{\tau}_{n+1} = \hat{\tau}_n - (1 - \frac{\varepsilon}{T}) \frac{\sum_{i=1}^{Np}(\sqrt{Q'^2_{Ei}+I'^2_{Ei}} - \sqrt{Q'^2_{Li}+I'^2_{Li}})}{\sum_{i=1}^{Np}(\sqrt{Q'^2_{Ei}+I'^2_{Ei}} + \sqrt{Q'^2_{Li}+I'^2_{Li}})} T$$

$$\hat{\theta}_{n+1} = \hat{\theta}_n - (1 - \frac{\varepsilon}{T}) \frac{\sum_{i=1}^{Np}(\sqrt{Q''^2_{Ei}+I''^2_{Ei}} - \sqrt{Q''^2_{Li}+I''^2_{Li}})}{\sum_{i=1}^{Np}(\sqrt{Q''^2_{Ei}+I''^2_{Ei}} + \sqrt{Q''^2_{Li}+I''^2_{Li}})} T$$

avec:

$$S'_i\left(\hat{\tau}_n - \varepsilon\right) = Q'_{Ei} + jI'_{Ei} \qquad et \qquad S'_i\left(\hat{\tau}_n + \varepsilon\right) = Q'_{Li} + jI'_{Li}$$

$$S''_i\left(\hat{\theta}_n - \varepsilon\right) = Q''_{Ei} + jI''_{Ei} \qquad et \qquad S''_i\left(\hat{\theta}_n + \varepsilon\right) = Q''_{Li} + jI''_{Li}$$

$\hat{\tau}_n$ et $\hat{\theta}_n$ sont les retards estimés dans la boucle précédente d'ordre n, T est une durée de l'ordre de la durée d'un symbole de code et $\varepsilon$ est une durée inférieure à la durée T, les fonctions S'$_i$ et S''$_i$ étant définies comme suit :

$$S_i'(\tau) = \int_{(i-1)T_M}^{iT_M} \left[ s(t)e^{-2\pi j f_d t} - \overset{\wedge}{z}_i.c\ (t-\overset{\wedge}{\theta}_n) \right] c(t-\tau)dt$$

$$S_i''(\theta) = \int_{(i-1)T_M}^{iT_M} \left[ s(t)e^{-2\pi j f_d t} - \overset{\wedge}{A}_i.c\ (t-\overset{\wedge}{\tau}_n) \right] c(t-\theta)dt$$

**4.** Récepteur selon l'une quelconque des revendications 2 ou 3, caractérisé en ce qu'il contient une boucle de poursuite de code comportant au moins :

- en entrée un échantillonneur complexe (41) du signal utile, la sortie réelle Q de cet échantillonneur attaquant l'entrée positive de premiers moyens de soustraction (871) et de deuxièmes moyens de soustraction (881), la sortie imaginaire I attaquant l'entrée positive de troisièmes moyens de soustraction (872) et de quatrièmes moyens de soustraction 882, les premiers et troisièmes moyens (871, 872) retranchant respectivement la partie réelle et la partie imaginaire du signal $zc(t - \theta_n)$ au signal Q et au signal I pour donner des signaux Q' et I', les deuxièmes et quatrièmes moyens de soustraction (881, 882) retranchant respectivement la partie réelle et la partie imaginaire du signal $\hat{A}c(t - \tau_n)$ au signal Q et au signal I pour donner des signaux Q" et I" ;

- deux voies d'estimation de retard (81, 82) fonctionnant en parallèle, les premiers moyens (81) traitant les signaux Q', I' pour fournir le retard direct $\tau_n$ et les deuxièmes moyens (82) traitant les signaux Q", I" pour fournir le retard parasite équivalent $\theta_n$ ;

- un premier synthétiseur de code (83) alimenté par la sortie des premiers moyens d'estimation (81) échantillonnant trois codes d'un retard $\hat{\tau}_n+\varepsilon$ sur une voie E, d'un retard $\hat{\tau}_n$ sur une voie P et d'un retard $\hat{\tau}_n-\varepsilon$ sur voie L, l'estimation du retard $\hat{\tau}_{n+1}$ étant réalisée à partir de la fonction d'intercorrélation des voies L, P, E avec les signaux Q', I' ;

- un deuxième synthétiseur de code (84) alimenté par la sortie des deuxièmes moyens d'estimation (82) échantillonnant trois codes d'un retard $\hat{\theta}n+\varepsilon$ sur une voie E, d'un retard $\hat{\theta}_n$ sur une voie P et d'un retard $\hat{\theta}_n-\varepsilon$ sur voie L, l'estimation du retard $\theta_{n+1}$ étant réalisée à partir de la fonction d'intercorrélation des voies L, P, E avec les signaux Q", I" ;

- des premiers moyens de multiplication (85) qui multiplient la voie P par l'amplitude A du signal direct pour produire $\hat{A}c(t - \tau_n)$ en entrée des deuxièmes et quatrièmes moyens de soustraction (881, 882)

- des deuxièmes moyens de multiplication (86) qui multiplient la voie P par l'amplitude z du signal parasite équivalent pour produire $\hat{z}c(t - \theta_n)$ en entrée des premiers et troisièmes moyens de soustraction (871, 872).

**5.** Récepteur selon les revendications 3 et 4, caractérisé en ce que les moyens d'estimation (81, 82) comportent au moins :

- des multiplieurs (43) qui multiplient les signaux échantillonnés Q', Q" par les parties réelles des signaux des voies L et E et les signaux échantillonnés I', I" par les parties imaginaires des signaux des voies L et E ;

- des moyens d'intégration (44) qui calculent pour chaque période de code d'ordre i les parties réelles et imaginaires des fonctions S'$_i$ pour les premiers moyens d'estimation (81) et S"$_i$ pour les deuxièmes moyens d'estimation (82) ;

- des moyens de discrimination de code (45) qui fournissent pour chaque période de code d'ordre i l'estimée du retard $\hat{\tau}_{n+1}$ en fonction du retard $\hat{\tau}_n$, des fonctions S'$_i$, S"$_i$, de $\varepsilon$ et de T.

**6.** Récepteur selon la revendication 6, caractérisé en ce qu'il comporte en sortie du discriminant de code (45) des moyens de filtrage (46) permettant d'effectuer un lissage des retards estimés.

7. Récepteur selon l'une quelconque des revendications 5 ou 6, caractérisé en ce qu'il comporte en sortie un oscillateur à commande numérique (47) qui alimente le synthétiseur de code (83, 84) en fonction du retard $\hat{\tau}_n$.

8. Récepteur selon l'une quelconque des revendications 2 à 7, caractérisé en ce qu'il utilise une fonction de vraisemblance V définie par :

$$V(\tau, \theta, A_1, ... A_{Np}, z_1, ... z_{Np}) = -\sum_{i=1}^{Np} \int_{(i-1)T_M}^{iT_M} \left| s(t) - A_i c(t-\tau) e^{2\pi j f_d t} - z_i c(t-\tau) e^{2\pi j f_d t} \right|^2 dt$$

Les amplitudes $A_i$ et $z_i$ estimées pour chacune des Np périodes de code d'une boucle vérifiant :

$$\frac{\partial V(\tau, \theta, A_1, ... A_{NP}, z_1, ... z_{NP})}{\partial A_i} = 0$$

$$\frac{\partial V(\tau, \theta, ... A_1, ... A_{NP}, z_1, ... z_{NP})}{\partial z_i} = 0$$

9. Récepteur selon l'une quelconque des revendications 2 à 8, caractérisé en ce qu'il comporte un module d'estimation des amplitudes $A_i$ et $Z_i$ pour chacune des Np périodes de code d'une boucle, comportant :

- des moyens (44) pour calculer les fonctions :

$$S_i(\tau_n) = \int_{(i-1)T_M}^{iT_M} s(t)c(t-\tau_n)e^{-2\pi j f_d t}dt \quad et \quad S_i(\theta_n) = \int_{(i-1)T_M}^{iT_M} s(t)c(t-\theta_n)e^{-2\pi j f_d t}dt$$

- des moyens (101) permettant de calculer la fonction d'intercorrélation $\Phi$ entre le signal reçu par le récepteur et le code c(t) pour l'argument $\tau$-$\theta$;
- des moyens (102) calculant les amplitudes $A_i$ et $z_i$ selon les relations suivantes :

$$\hat{A}_i = \frac{\phi(\theta_n - \hat{\tau}_n)S_i(\theta_n) - \rho_c S_i(\hat{\tau}_n)}{\phi(\theta_n - \hat{\tau}_n)^2 - \rho_c^2}$$

$$\hat{z}_i = \frac{\phi(\theta) - \hat{\tau}_n)S_i(\hat{\tau}_n) - \rho_c S_i(\theta_n)}{\phi(\hat{\theta}_n - \hat{\tau}_n)^2 - \rho_c^2}$$

où

$$\rho_c = \int_0^{NpT_M} c(t)^2 dt$$

10. Récepteur selon les revendications 5 et 9, caractérisé en ce que les moyens de calcul des fonctions $S_i(\hat{\tau}_n)$ et $S_i(\theta n)$ sont inclus dans les moyens d'intégration (44), ces fonctions étant calculées à partir des signaux des voies P.

FIG.1

FIG.2

FIG.3

FIG.4

EP 1 102 083 A1

FIG.5

FIG.6a

FIG.6b

P(k)

72

71

$\theta_k$

$\tau$

$\Delta_\theta$

## FIG.7a

P(k)

74

73

75

$f_d$

$f_k$

## FIG.7b

FIG.8

FIG.9

EP 1 102 083 A1

FIG.10

**Office européen des brevets**

## RAPPORT DE RECHERCHE EUROPEENNE

Numéro de la demande

EP 00 40 3138

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 692 008 A (VAN NEE RICHARD D J) 25 novembre 1997 (1997-11-25) * colonne 6, ligne 12 - colonne 8, ligne 42; figure 6 * --- | 1 | G01S1/04 H04B1/707 |
| X | KAPLAN D: "Understanding GPS: Principles and Applications" 1996 , ARTECH HOUSE , BOSTON, MA, US XP002145303 * page 256, ligne 10 - page 260, ligne 10 * --- | 1 | |
| A | US 5 923 703 A (MARTIN KREG ET AL) 13 juillet 1999 (1999-07-13) * colonne 4, ligne 52 - colonne 7, ligne 45 * --- | 1 | |
| A | US 5 901 183 A (ZHODZICSHSKY MARK ET AL) 4 mai 1999 (1999-05-04) * abrégé * ----- | 1 | |

**DOMAINES TECHNIQUES RECHERCHES (Int.Cl.7)**

G01S
H04B

Le présent rapport a été établi pour toutes les revendications

| Lieu de la recherche | Date d'achèvement de la recherche | Examinateur |
|---|---|---|
| LA HAYE | 9 mars 2001 | Haffner, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 00 40 3138

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-03-2001

| Document brevet cité au rapport de recherche | Date de publication | Membre(s) de la famille de brevet(s) | | Date de publication |
|---|---|---|---|---|
| US 5692008 A | 25-11-1997 | US | 5615232 A | 25-03-1997 |
| | | AU | 7898094 A | 01-06-1995 |
| | | CN | 1113619 A | 20-12-1995 |
| | | EP | 0654677 A | 24-05-1995 |
| | | JP | 8037471 A | 06-02-1996 |
| US 5923703 A | 13-07-1999 | US | 5963601 A | 05-10-1999 |
| | | WO | 9744682 A | 27-11-1997 |
| US 5901183 A | 04-05-1999 | AU | 4487697 A | 17-04-1998 |
| | | EP | 0940016 A | 08-09-1999 |
| | | WO | 9813947 A | 02-04-1998 |

EPO FORM P0460

Pour tout renseignement concernant cette annexe : voir Journal Officiel de l'Office européen des brevets, No.12/82